# EUROPEAN PATENT APPLICATION

(11) **EP 0 920 211 A2**
(43) Date of publication of application: **02.06.1999**
(21) Application number: 98309816.1
(22) Date of filing: 01.12.1998
(51) Int. Cl.: H04N 7/18

(54) **A method of forming a panoramic image**

(30) Priority: 01.12.1997 JP 330566/97; 19.02.1998 JP 37778/98; 09.04.1998 JP 97960/98
(71) Applicant: Lsi Card Corporation, Osaka 556-0005 (JP)
(72) Inventor: Ohki, Sinji, Osaka 556-0005 (JP)
(74) Representative: Finnie, Peter John

(57) **Abstract**

A plurality of cameras (1) with a low picture angle are arranged in the circumferential direction around a predetermined position as the centre. Images, picked up by the respective cameras (1) in the same timing, are joined and synthesized so that a high-quality image stretching over the entire region in the circumferential direction, or one portion thereof, is formed.

## Description

Systems in which a camera is placed for security purpose in an office or for monitoring a construction site, etc. are widely used. Such security and monitoring cameras have only a limited image pickup area (a pickup angle) whether they are of the fixed type or of the movable type, and in most cases they are not designed to monitor the entire area in the circumferential direction.

When those cameras having only limited image-pickup angles are used, it is inevitable to have a dead-angle area within the image-pickup range, resulting in a problem of lack of precision. To solve this problem, a system in which images are acquired while moving a camera in the entire region in the circumferential direction has been introduced; however, since time lag occurs in the image pickup timing, it is impossible to acquire an image stretching over the entire region in the circumferential direction in the same timing.

As described above, it is highly desirable to acquire an image stretching over the entire region in the circumferential direction in the same timing. Such a system, which displays an image stretching over the entire region in the circumferential direction acquired in the same timing as a continuous panorama view, makes it possible to provide the same image as obtained when a person looks around while shifting his eyes, and is considered to have applications in shows at expositions, theme parks, etc. and game machines and the like.

In order to form an image of this type stretching over the entire region in the circumferential direction, it has been proposed that several high-picture-angle (approximately, 100 degrees) cameras are installed, images of an object are acquired from respectively different angles at the same time, and then a plurality of images thus obtained are joined to one another. However, although this method reduces the number of cameras to be used, the image obtained by each camera has large distortions in its edge portions, thereby making image processing complicated upon joining adjacent images. The resulting problem is a difficulty in obtaining an image whose joined portions of acquired images are displayed in an acceptable manner. Another problem is that images acquired by wide-angle cameras do not have good image quality.

Another method has been suggested in which a number of pieces of image data are acquired by picking up images of an object from optional directions, and then an image stretching over the entire region in the circumferential direction is obtained by selecting required image data from the image data that have been acquired. However, setting the criteria for selecting image data is difficult.

According to a first aspect of the present invention, a method for forming an image stretching over an entire region in a circumferential direction or one portion thereof around a predetermined position as a center, comprises the steps of:
picking up images by a plurality of cameras placed in the circumferential direction around the predetermined position as the center; and,
joining and synthesizing the images that have been picked up.

According to a second aspect of the present invention, an apparatus for forming an image stretching over an entire region in a circumferential direction or one portion thereof around a predetermined position as a center, comprises:
a plurality of cameras placed in the circumferential direction around the predetermined position as the center; and,
synthesis means for joining and synthesizing the images that have been picked up by the plurality of cameras.

In the present invention, a plurality of cameras (for example, not less than ten) with a low picture angle (for example, approximately not more than 50 degrees) are placed in the circumferential direction centered on a predetermined position, images that have been picked up by the cameras in the same timing are joined and synthesized so that a high-quality image stretching over the entire region in the circumferential direction or one portion of the region is obtained by using a simple construction.

When such an image stretching over the entire region in the circumferential direction or one portion of the region is formed, the image data obtained by each camera is stored in an image memory that is installed for each camera, and an image file is formed by reading such image data, and a synthesizing process for the image is carried out on the image file. Alternatively, pieces of image data, obtained by the respective cameras are successively acquired while switching inputs from the respective cameras, and a synthesizing process for the image may be carried out on these pieces of image data.

Upon joining images obtained by the respective cameras, first a calibration process is carried out so as to eliminate distortions in the edge portions of the images from the respective cameras, the two-dimensional orthogonal coordinates of each pixel is converted to the spherical coordinates so as to form a panoramic view, and then images located within the same pickup range and picked up by adjacent cameras are overlapped and synthesized so that an image containing the synthesized image that stretches over the entire region in the circumferential direction or one portion of the region is obtained. Thus, it becomes possible to obtain a high-quality image free from distortions even in the joined areas.

Moreover, when adjacent first and second images are synthesized, along the side edge portion of the first image, more pixels of the second image are used as compared with the first image, and along the side edge portion of the second image, more pixels of the first image are used as compared with the second image. This arrangement makes it possible to carry out a smooth image synthesis at joined areas.

Furthermore, the image data after the synthesis process is compressed by a compression means so that the amount of data to be transferred is reduced. Here, the means for synthesizing images, the means for compressing the image data, etc. may be formed into a single chip; thus, miniaturization of the apparatus is achieved.

Moreover, the compressed image data thus formed is recorded in a recording means, and desired compressed image data is selected from the contents of recording, and the selected compressed image data is decompressed to obtain original image data that is displayed; therefore, corresponding images obtained when eyes are directed in various directions are easily displayed for the user.

Examples of the present invention will now be described in detail with reference to the accompanying drawings, in which:
FIG. 1A is a front view that shows an example of layout of cameras in an image forming apparatus of the present invention;
FIG. 1B is a plan view that shows an example of layout of cameras in the image forming apparatus of the present invention;
FIG. 2 is a schematic drawing that shows the entire construction of the first embodiment of the image forming apparatus of the present invention;
FIG. 3 is a flow chart that shows a sequence of processes in the first and second embodiments of the image forming apparatus of the present invention;
FIG. 4 is a schematic drawing that shows the entire construction of the second embodiment of the image forming apparatus of the present invention;
FIG. 5 is a schematic drawing that shows the entire construction of the third embodiment of the image forming apparatus of the present invention;
FIG. 6 is a flow chart that shows a sequence of processes in the third and fourth embodiments of the image forming apparatus of the present invention;
FIG. 7 is a schematic drawing that shows the entire construction of the fourth embodiment of the image forming apparatus of the present invention;
FIG. 8 is a flow chart that shows a sequence of operations of a synthesis process (overlap process) of an image;
FIGS. 9A through 9E are conceptual drawings of images in the synthesis process (overlap process);
FIG. 10 is an explanatory drawing that shows a selection process of pixels in an overlapping area;
FIG. 11 is a flow chart that shows a sequence of processes of pixel selection;
FIG. 12 is a front view that shows another example of layout of cameras in the image forming apparatus of the present invention;
FIG. 13 is a front view that shows still another example of layout of cameras in the image forming apparatus of the present invention;
FIG. 14 is a drawing that shows a specific structural example of the present invention;
FIG. 15 is a block diagram that shows one example of a construction of an image presenting apparatus of the present invention;
FIG. 16 is a drawing that shows one example of application of the image presenting apparatus of the present invention; and,
FIG. 17 is a block diagram that shows another example of a construction of an image presenting apparatus of the present invention.

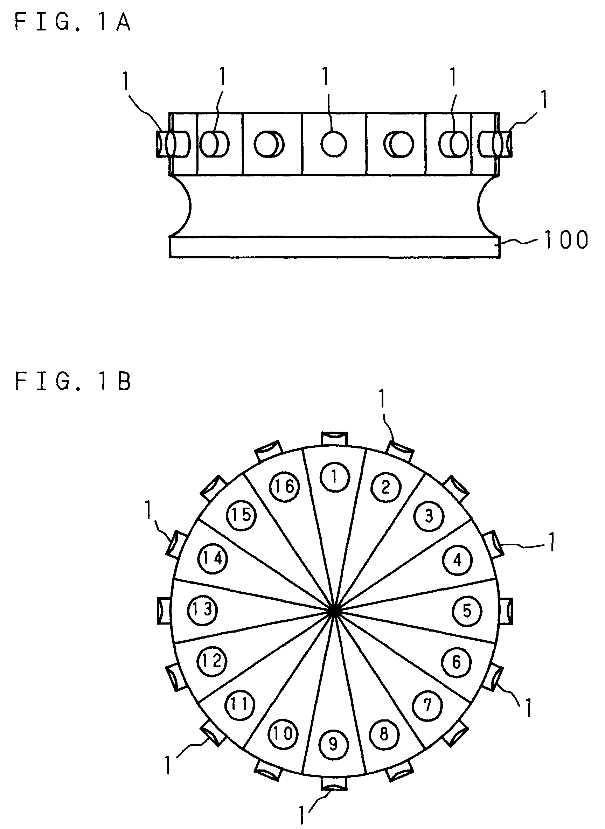

FIG. 1 shows a layout pattern of a plurality of cameras used in an image forming apparatus of the present invention; and FIG. 1A is its front view and FIG. 1B is its plan view. Reference numeral 100 in the Figures is a camera mounting base having a cylinder shape with a slightly narrow portion in the center. Sixteen cameras 1 are placed on the upper side face of the camera mounting base 100 in the circumferential direction with the same intervals. That is, sixteen cameras 1 are secured to positions in the circumferential direction with 22.50 in the central angle. Each camera 1 is a standard camera with a low picture angle, and its viewing angle is 38° in the horizontal direction and 48 to 50° in the vertical direction. These cameras 1 are fixedly secured, and pick up images of the respective areas within the viewing angle in the same timing, thereby acquiring image data.

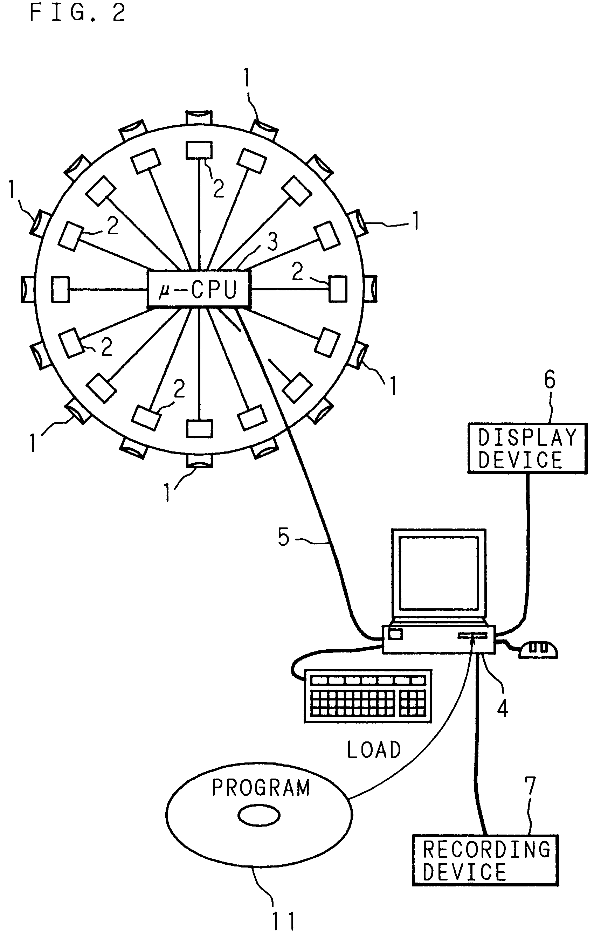

FIG. 2 is a schematic drawing that shows the entire construction of one example (first embodiment) of the image forming apparatus of the present invention. Each of the 16 cameras 1 is connected to a frame memory 2 serving as an image memory, and each frame memory 2 acquires image data picked up by the corresponding camera 1 in the same timing. A µ-CPU 3 serving as a filing means is connected to the frame memories 2, and the µ-CPU 3 acquires image data of one frame from each frame memory 2 in the same timing, and forms image files, each having image data of 16 frames.

The µ-CPU 3 is connected to a personal computer 4 serving as a synthesis means for carrying out a synthesis process (overlap process) on images through a transfer line 5 as a transfer means. The personal computer 4 acquires image files from the µ-CPU 3 through the transfer line 5, and carries out a synthesis process (overlap process) on adjacent images in the image files that have been acquired, thereby forming a synthesized image with a panoramic view stretching over the entire region in the circumferential direction. Then, data of the image containing the acquired synthesized image stretching over the entire region in the circumferential direction is transferred to a display device 6 having a common structure so that the panoramic image is displayed thereon. Further, the image data is transferred to a recording device 7 where it is recorded in its internal medium.

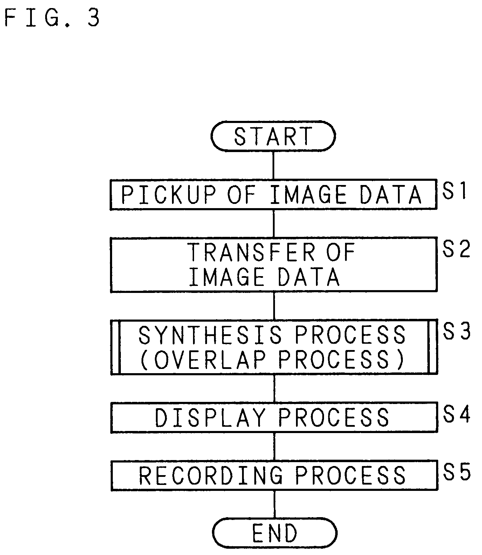

Next, an explanation will be given of the sequence of operations. FIG. 3 is a flow chart that shows a sequence of processes in the image forming apparatus of the present invention. Images of an object (external scene) are picked up by the 16 fixed cameras 1 as shown in FIG. 1 in the same timing, and the acquired image data is written to the corresponding frame memory 2 (step S1). The written image data is read out by the µ-CPU 3, the image data of 16 frames are formed into an image file of one file, the image file thus formed is transferred to the personal computer 4 through the transfer line 5 (step 52). Further, the personal computer 4 carries out a synthesis process (overlap process) on adjacent images, thereby forming one sheet of a panoramic image stretching over the entire region in the circumferential direction (step S3). The synthesis process (overlap process) of images will be described in detail below. The panoramic image is displayed on the display device 6 (step S4). Moreover, the synthesized image data is transferred to the recording device 7, and recorded in the internal recording medium (step S5).

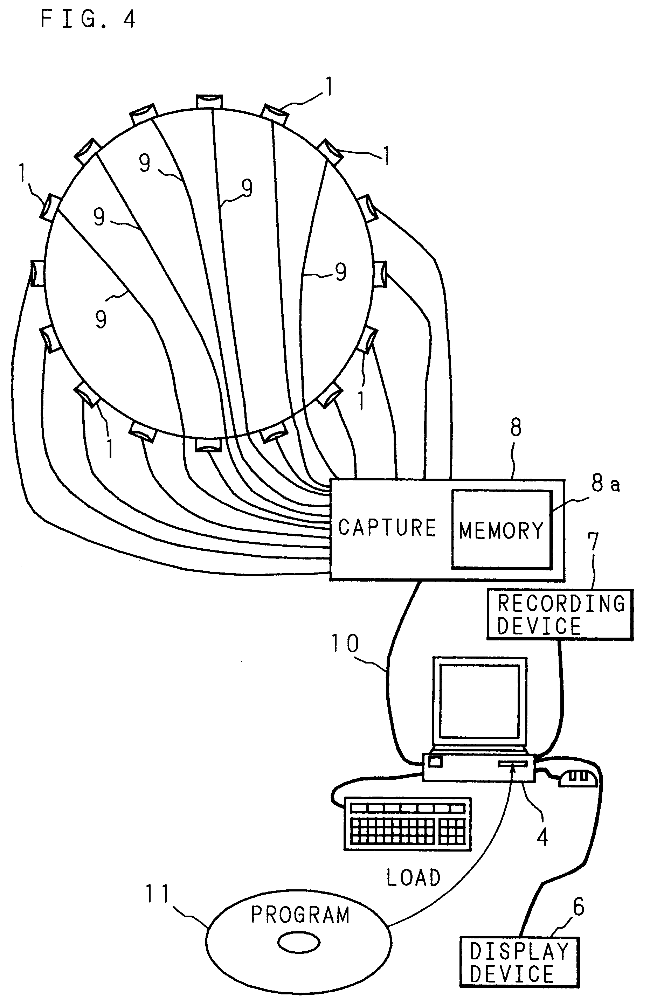

FIG. 4 is a schematic drawing that shows the entire construction of another example (second embodiment) of the image forming apparatus of the present invention. One end of a video signal line 9 is connected to each of the 16 cameras 1 with the other end being connected to a capture 8 serving as a switching means. The capture 8 switches the connected inputs of 16 video signal lines 9 so as to successively acquire image data picked up by the corresponding camera 1, and stores it in a memory 8a serving as an internal storage means.

The capture 8 is connected to the personal computer 4 as a synthesis means for carrying out a synthesis process (overlap process) on images by a data line 10 serving as a transfer means. The personal computer 4 acquires image data from the capture 8 through the data line 10, carries out the synthesis process (overlap process) on adjacent images based upon the acquired image data, thereby forming a synthesized image with a panoramic view stretching over the entire region in the circumferential direction. Then, data of the image containing the acquired synthesized image stretching over the entire region in the circumferential direction is transferred to the display device 6 having a common structure so that the panoramic image is displayed thereon. Further, the image data is transferred to the recording device 7 where it is recorded in its internal medium.

Next, an explanation will be given of the sequence of operations. Images of an object (external scene) are picked up by the 16 fixed cameras 1 as shown in FIG. 1, the image data picked up by each camera 1 is acquired by the memory 8a inside the capture 8 through the video signal line 9 in accordance with the switching operation of the capture 8 (step S1). The acquired image data is transferred to the personal computer 4 through the data line 10 (step S2). Further, the personal computer 4 carries out a synthesis process (overlap process) on adjacent images, thereby forming one sheet of a panoramic image stretching over the entire region in the circumferential direction (step S3). Again, the synthesis process (overlap process) of images will be described in detail below. The panoramic image is displayed on the display device 6 (step S4). Moreover, the synthesized image data is transferred to the recording device 7, and recorded in the internal recording medium (step S5).

As compared with the second embodiment shown in FIG. 4, the first embodiment as shown in FIG. 2 is advantageous in that the image data transfer is performed at high speeds. Although it is inferior in data transfer speeds, the second embodiment is advantageous in view of its simplified construction, as compared with the first embodiment. For example, if the switching device such as the capture 8 is installed on the camera side, the construction is so simple that only one data line 10 needs to be installed.

In the case when an object for image-pickup is a moving image, the amount of image data becomes enormous, and when the image data is transferred in real time, it exceeds the capacity of the transfer line. In these circumstances the acquired synthesized image data is compressed and then transferred to the personal computer.

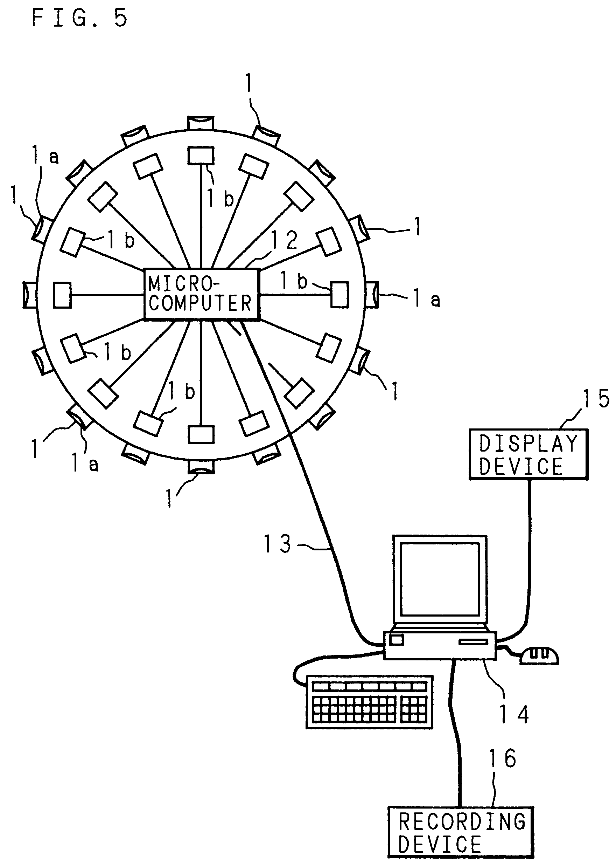

FIG. 5 is a schematic drawing that shows the entire construction of another example (third embodiment) of the image forming apparatus of the present invention. Each of the 16 cameras 1 has a lens la and a CCD lb. The CCD lb of each camera 1 is connected to a microcomputer 12, which carries out an input process of image data from the CCD lb, a synthesis process of moving images, a compressing process for the moving image data and an output process of the compressed moving image data. The microcomputer 12 acquires moving image data of 1 frame from each CCD lb in the same timing, and carries out a synthesis process (overlap process) on adjacent moving images picked up by adjacent cameras 1, and then compresses the synthesized moving image data, thereby obtaining compressed-synthesized moving image data.

The microcomputer 12 is connected to a personal computer 14 through a transfer line 13, and outputs the compressed-synthesized moving image data to the transfer line 13. The personal computer 14 acquires the compressed-synthesized moving image data from the microcomputer 12 through the transfer line 13. Then, the personal computer 14 carries out a decompression process on the acquired compressed-synthesized moving image data so as to return it to the original synthesized moving image data, thereby obtaining one sheet of synthesized moving image with a panoramic view stretching over the entire region in the circumferential direction. The synthesized moving image data thus obtained is sent to a display device 15, and the panoramic moving image is displayed on the screen. Further, the compressed-synthesized moving image data acquired by the personal computer 14 is sent to a recording device 16, and stored in its internal medium. Moreover, the personal computer 14 transfers control signals for controlling image-data inputs from the respective cameras 1 to the microcomputer 12 through the transfer line 13.

The means for carrying out the synthesis process, the means for carrying out the compression process, the means for carrying out the input process of moving image data from the cameras 1 and the means for carrying out the output process of the compressed-synthesized moving image data to the transfer line 13 are assembled into the same chip in the one-chip form. Accordingly, it is possible to provide a compact apparatus.

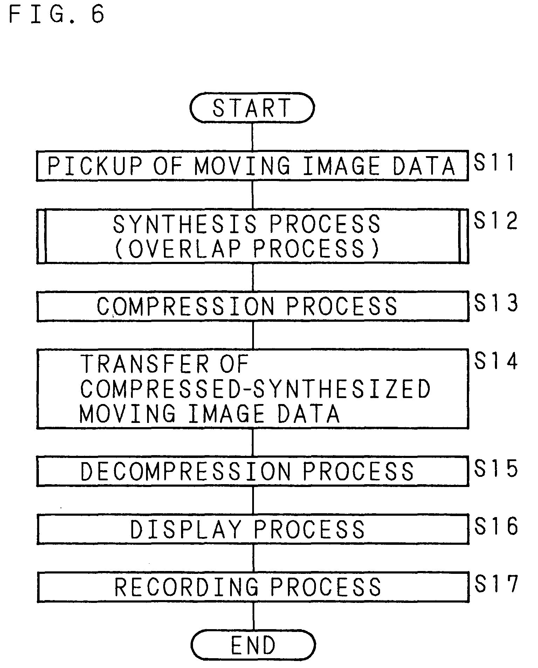

Next, an explanation will be given of the sequence of operations. FIG. 6 is a flow chart that shows a sequence of processes in the image forming apparatus of the present invention. Images of an object (external scene) are successively picked up by the fixed 16 cameras 1 shown in FIG. 1, and moving image data acquired by the CCD lb of each camera 1 is sent to the microcomputer 12 (step S11). Then, the microcomputer 12 carries out a synthesis process (overlap process) on adjacent moving images, which will be described in detail below, thereby obtaining one sheet of panoramic moving image stretching over the entire region in the circumferential direction (step S12).

This synthesized moving image data is subjected to a compression process based upon, for example, MPEG2 (Moving Picture Experts Group Phase 2) using DCT (Discrete Cosine Transform) so that compressed-synthesized moving image data is obtained (step S13). The compressed-synthesized moving image data is transferred to the personal computer 14 through the transfer line 13, for example, at a rate of 16 frames per second (step S14).

The compressed-synthesized moving image data, acquired by the personal computer 14, is subjected to a decompression process so that it is restored to the original synthesized moving image data (step S15). Then, the restored synthesized moving image data is sent to the display device 15, and panoramic moving image corresponding to the synthesized moving image data is displayed on the screen of the display, device 15 (step S16). Moreover, the compressed-synthesized moving image data, acquired by the personal computer 14, is sent to the recording device 16, and the compressed-synthesized moving image data is recorded in a recording medium inside the recording device 16 (step S17).

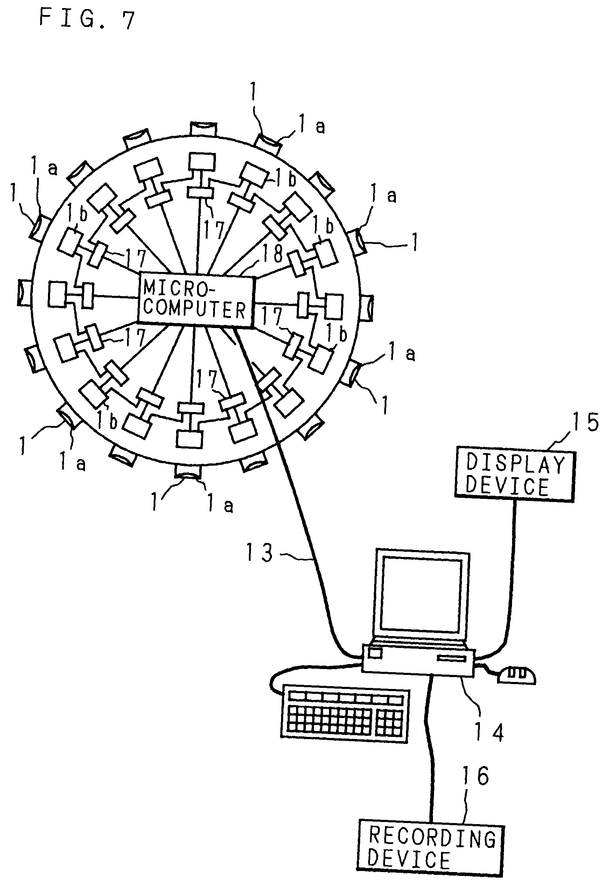

FIG. 7 is a schematic drawing that shows the entire construction of another example (fourth embodiment) of the image forming apparatus of the present invention. Each of 16 cameras 1 has the lens la and the CCD lb. µ-CPU 17, which carries out an input process on image data from the CCD lb and a synthesis process on moving images, is connected to the CCD lb of each camera 1, and these 16 µ-CPUs 17 are connected to a microcomputer 18 which carries out a compression process on the moving image data and an output process on the compressed moving image data. Moreover, each of the µ-CPUs 17 is also connected to the CCD lb of the camera 1 that is located next on the right side. Accordingly, it acquires moving image data one frame in the same timing from the adjacent two cameras 1 (CCDs lb). Each of the µ-CPU 17 carries out the synthesis process (overlap process) on adjacent moving images that have been acquired, and the synthesized moving image date is outputted to the microcomputer 18. The microcomputer 18 carries out the compression process on the synthesized moving image data that has been inputted from each of the µ-CPUs 17, thereby obtaining compressed-synthesized moving image data.

The microcomputer 18 is connected to the personal computer 14 through the transfer line 13, and outputs the compressed-synthesized moving image data to the transfer line 13. The personal computer 14 acquires the compressed-synthesized moving image data from the microcomputer 18 through the transfer line 13. Then, the personal computer 14 carries out a decompression process on the acquired compressed-synthesized moving image data so as to return it to the original synthesized moving image data, thereby obtaining one sheet of synthesized moving image with a panoramic view stretching over the entire region in the circumferential direction. The synthesized moving image data thus obtained is sent to the display device 15 so that the panoramic moving image is displayed on the screen. Moreover, the compressed-synthesized moving image data acquired by the personal computer 14 is sent to the recording device 16, and stored in its internal medium. Furthermore, the personal computer 14 transfers control signals for controlling image data inputs from the respective cameras 1 to the microcomputer 18 through the transfer line 13.

Again, the means for carrying out the synthesis process, the means for carrying out the compression process, the means for carrying out the input process of moving image data from the cameras 1 and the means for carrying out the output process of the compressed-synthesized moving image data to the transfer line 13, that is, the respective µ-CPUs 17 and the microcomputer 18, are assembled into the same chip in the one-chip form to provide a compact apparatus.

Next, an explanation will be given of the sequence of operations. Images of an object (external scene) are successively picked up by the fixed 16 cameras 1 shown in FIG. 1, and moving image data acquired by the CCD lb of each camera 1 is sent to adjacent two µ-CPUs 17 (step S11). Then the µ-CPUs 17 carry out a synthesis process (overlap process) on adjacent moving images, which will be described in detail below, thereby obtaining synthesized moving image (step S12).

This synthesized moving image data is sent from the respective µ-CPUs 17 to the microcomputer 18 where it is subjected to a compression process based upon, for example, MPEG2 using PCT so that compressed-synthesized moving image data is obtained (step S13). The compressed-synthesized moving image data is transferred to the personal computer 14 through the transfer line 13, for example, at a rate of 16 frames per second (step S14).

The compressed-synthesized moving image data, acquired by the personal computer 14, is subjected to a decompression process so that it is restored to the original synthesized moving image data (step S15). Then, the restored synthesized moving image data is sent to the display device 15, and panoramic moving image corresponding to the synthesized moving image data is displayed on the screen of the display device 15 (step S16). Moreover, the compressed-synthesized moving image data, acquired by the personal computer 14, is sent to the recording device 16, and the compressed-synthesized moving image data is recorded in a recording medium inside the recording device 16 (step S17).

In the fourth embodiment shown in FIG. 7, the synthesis process (overlap process) of moving images is carried out by each of the µ-CPUs 17 on the camera 1 side individually; thus, it becomes possible to provide high-speeds in the entire process as compared with the third embodiment.

Moreover, in the above-mentioned example of the arrangement as shown in FIG. 7, the synthesis process is carried out in each of the µ-CPUs 17 and the compression process is carried out in the microcomputer 18; however, each of the µ-CPUs 17 may be designed to carry out one portion of the compression process or all the compression process in addition to the synthesis process. In this case, it is possible to increase the entire processing speed with respect to the acquired moving image data.

The third and fourth embodiments have discussed the case in which moving images are used as picked up images; however, still images may be used as picked up images in the same manner. In this case, the compression process is carried out based upon JPEG (joint Photographic Experts Group) using DCT.

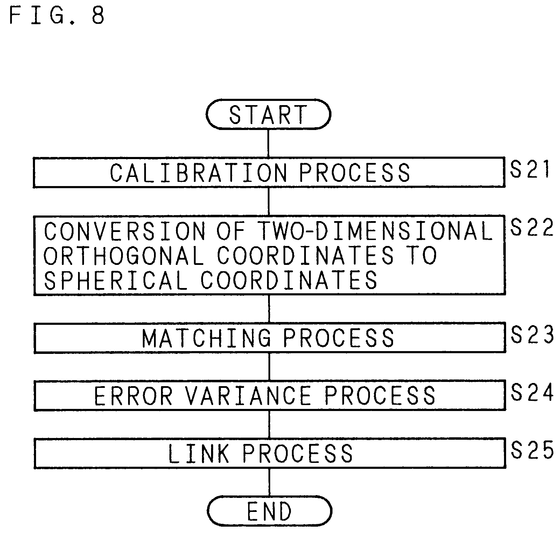

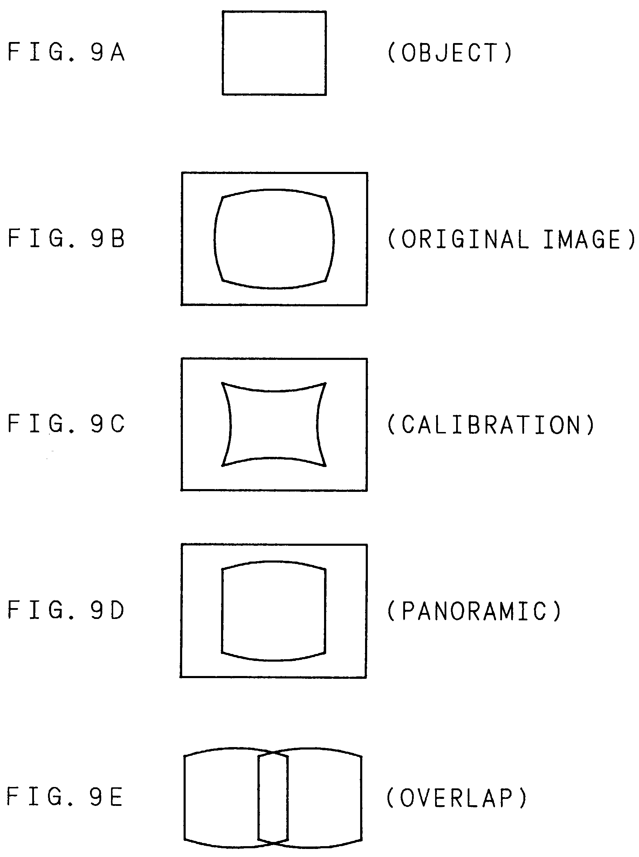

Next, an explanation will be given of the synthesis process (overlap process) of images picked up by adjacent cameras 1 in the image forming apparatus (the first through fourth embodiments) of the present invention. FIG. 8 is a subroutine in step S3 of FIG. 3 and step S12 of FIG. 6, that is, a flow chart showing a sequence of the operations of the synthesis process (overlap process). Moreover, FIGS. 9A through 9E are conceptual drawings of images used in the synthesis process (overlap process). The process is carried out on a software basis, and the program for carrying out the process is loaded from, for example, a recording medium 11, such as a magnetic disk and a CD-ROM, to the personal computer 4 as shown in FIG. 2 or FIG. 4 in the first and second embodiments. Further, in the third and fourth embodiments, the program is read from an internal ROM of the microcomputer 12 or each of the µ-CPUs 17, or loaded from an external recording medium, such as a magnetic disk and a CD-ROM, to the microcomputer 12 or each of the µ-CPUs 17.

Image data (FIG. 9B), which is an original image picked up from an object (FIG. 9A) by each camera 1, is read by the personal computer 4, the microcomputer 12 or each of the µ-CPUs 17, and then is first subjected to a calibration process (step S21. FIG. 9C). The calibration process is an essential process for eliminating lens aberration in the camera 1. The lens of the camera 1 has inherent distortion, and the distortion generally becomes greater towards the edge portion. When adjacent images are matched and joined later, the edge portions are subjected to the joining process. Therefore, in the present invention, the precision of this calibration process is greatly influential to the image quality of a final panoramic image stretching over the entire region in the circumferential direction.

Next, the two-dimensional orthogonal coordinates of each pixel of the image data is converted into spherical coordinates so as to provide a panoramic form (step S22. FIG. 9D).

In this case, the specification of each camera 1 is constant, and the position of each camera 1 is fixed; therefore, the above-mentioned 'calibration process' (S21) and 'coordinate conversion process' (S22) only exist on an algorithm basis in the image-data process, and the results of calculations always give fixed values. Therefore, the calculations on these processes are carried out only once, and the results of calculations are stored in a conversion table such as LUT; thus, in the next operation, the image data after the 'calibration process',(S21) and 'coordinate conversion process' (S22) is easily obtained only by referring to the conversion table, thereby making it possible to provide high-speed processes.

Next, a matching process which identifies overlapping portions in the image-pickup ranges of adjacent images, and overlaps the images on each other is carried out (step S23, FIG. 9E). In this matching process, the pieces of adjacent image data are compared with each other in their luminance level and color level for each pixel, and an overlapping position which provides the highest degree of coincidence is selected. Here, if evaluation of the degree of coincidence is carried out on each of the luminance level and three primary color levels, a long processing time is required; therefore, comparisons are made in blue-color level approximating to the luminance level, and evaluating the degree of coincidence therein is practical. Here, in the present invention, since each camera 1 is fixedly secured and the position is fixed, such a matching process is carried out only once at first, and thereafter, it is possible to utilize the results of the process.

Here, it is considered to be impossible to arrange no less than ten cameras 1 precisely on the side face of the camera mounting base 100 vertically. Therefore, in the case when the cameras 1 are diagonally fixed, when accurate matching processes are carried out between adjacent images, the joined image has a spiral form, with the result that the last ends are not joined favorably. In order to eliminate the fixing error of the cameras 1, the amount of offset between the images of the respective last ends is detected based upon the results of the above-mentioned matching process, and the pixels of the respective images are shifted in accordance with the results of detection, thereby carrying out a fixing error variance process (step S24). Here, since the position of each camera 1 is fixed, the error variance process is also carried out only once at first, and thereafter, the results of the process can be utilized. Since such an error variance process is carried out, it is not necessary to fix the cameras 1 to the camera mounting base 100 with high precision. Additionally, if the cameras 1 are secured precisely to the side face of the camera mounting base 100 vertically, the error variance process is not necessary.

As described above, in the present invention, in the case when images picked up by the cameras 1 are joined, the calibration process is first carried out so as to eliminate distortion in the edge portion of the image picked up by each camera 1, the two-dimensional orthogonal coordinates of each pixel is converted to spherical coordinates so as to provide a panoramic form, and then the images in the same pick-up range picked up by adjacent cameras 1 are overlapped on each other and synthesized so that an image containing the synthesized image stretching over the entire region in the circumferential direction is obtained. Consequently, it is possible to obtain a high-quality image without distortion even at overlapped areas.

Lastly, a link process for images, which takes it into consideration parallax resulting from right and left eyes of humans, is carried out (step S25). In this link process, overlapping (synthesis) of adjacent images is smoothed by the following two processes (selection of pixels, correction of brightness). Here, the link process is carried out not only on the first process, but also on all cases in the image synthesis.

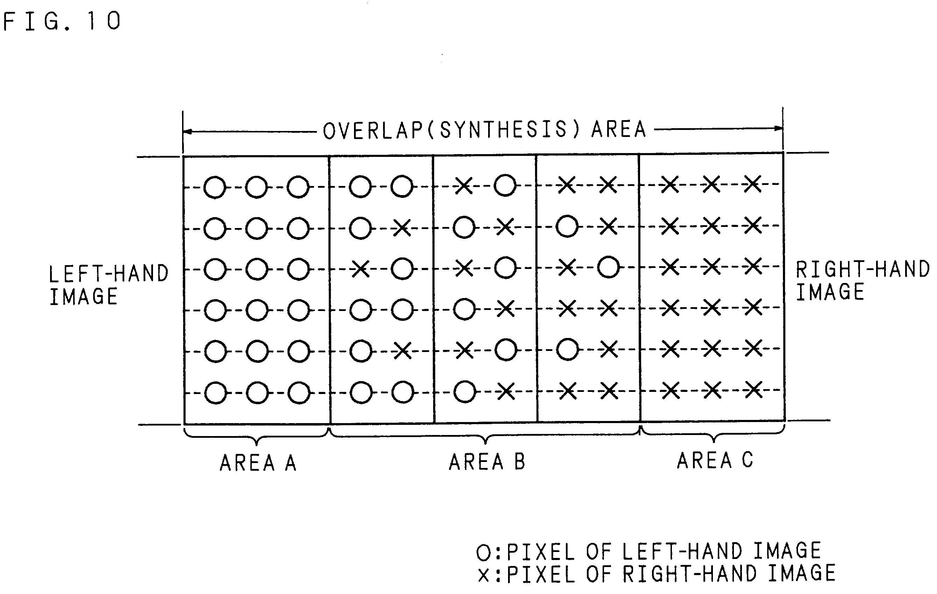

FIG. 10 is a schematic drawing that explains the selection process of pixels. As shown in FIG. 10, when right and left two images are synthesized, the synthesis area is divided into area A consisting of only pixels of the left-hand image (symbol O), area B consisting of pixels of the right- and left-hand images in a mixed manner, and area C consisting of pixels of the right-hand image (symbol X). In area A that corresponds to the side edge of the left-hand image, only the pixels (O) of the left-hand image are selected without taking pixels (X) of the right-hand image, and in area C that corresponds to the side edge of the right-hand image, only the pixels X) of the right-hand image are selected without taking pixels (O) of the left-hand image. Moreover, in area B having pixels of the right- and left-hand images in a mixed manner, the ratio of pixels (O) of the left-hand image increases toward the left side of the area, and the ratio of pixels (X) of the right-hand image increases toward the right side of the area. In the mid-point of the two areas, the ratio of Pixels (O, X) of the two images are evenly set. The adoption of this type of pixel selection makes it possible to provide a smooth image synthesis.

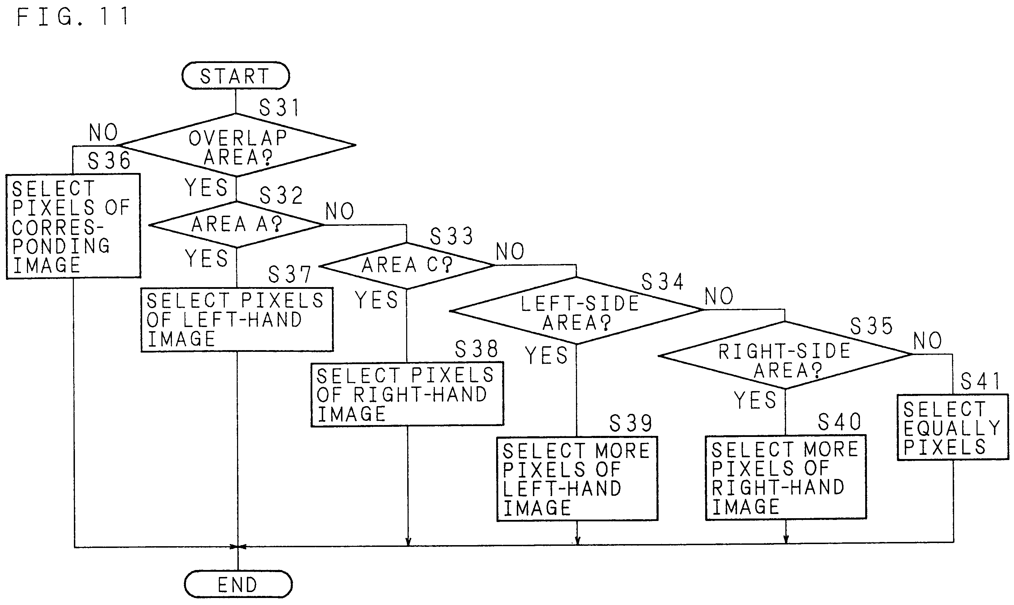

FIG. 11 is a flow chart that shows a sequence of such selection process of pixels. First, a judgement is made as to whether or not an area is an overlap (synthesis) area (step S31). If it is not an overlap (synthesis) area (S31:NO), pixels of the corresponding area are selected (step S36). If it is an overlap (synthesis) area (S31:YES), a judgement is made as to whether or not it is area A (step S32). If it is area A (S32:YES), only pixels of the left-hand image are selected (step S37). If it is not area A (S32:NO), a judgement is made as to whether or not it is area C (step S33). If it is area C (S33:YES), only pixels of the right-hand image are selected (step S38). If it is not area C (S33:NO), which means it is area B, a judgement is made as to whether or not it is a left-side area within area B (step S34). If it is a left-side area within area B (S34:YES), pixels of both of the images are selected so that the number of pixels of the left-hand image becomes greater than the number of pixels of the right-hand image (step S39). If it is not a left-side area within area B (S34:NO), a judgement is made as to whether or not it is a right-side area within area B (step S35). If it is a right-side area within area B (S35:YES), pixels of both of the images are selected so that the number of pixels of the right-hand image becomes greater than the number of pixels of the left-hand image (step S40). If it is not a right-side area within area B (S35:NO), which means it is a middle area within area B, pixels of both of the images are selected so that the number of pixels of the right-hand image and the number of pixels of the left-hand image are the same (step S41).

Adjacent images picked up generally have different brightness. In other words, in the case of picking up an image of a potion illuminated by sun light, the image picked up becomes dark due to brightness correction; in contrast, in the case of picking up an image of a dark portion, the image picked up becomes bright. Therefore adjacent two images picked up with the same region have normally different brightness. For this reason, changes in brightness are smoothly shifted by correcting the luminosity and brightness of pixels in adjacent images so that a smooth synthesized image can be obtained.

As described above, in the present invention, upon synthesizing adjacent first and second images, more pixels in number of the second image are used at the side edge portion of the first image than those of the first image, and more pixels in number of the first image are used at the side edge portion of the second image than those of the second image. Thus, it becomes possible to provide a smooth synthesis of images at overlapped areas.

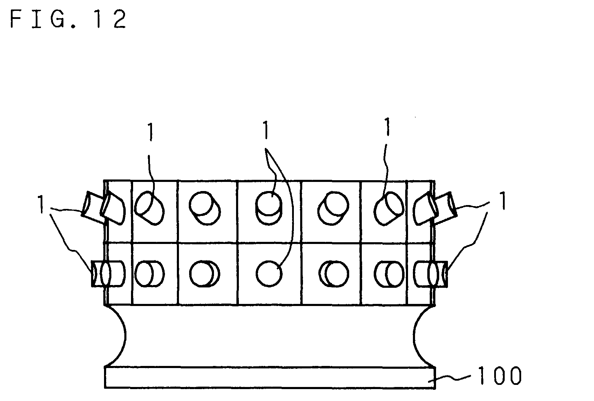

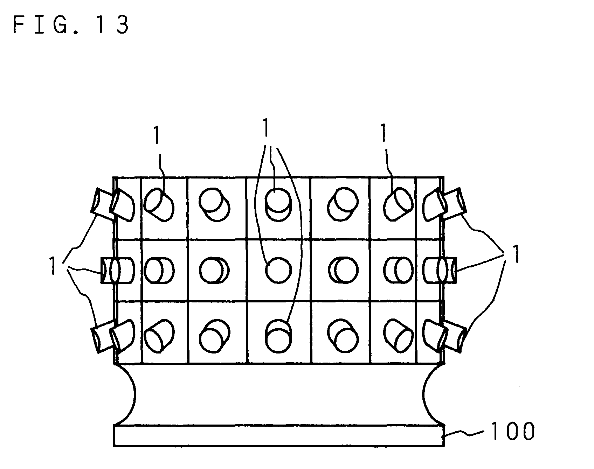

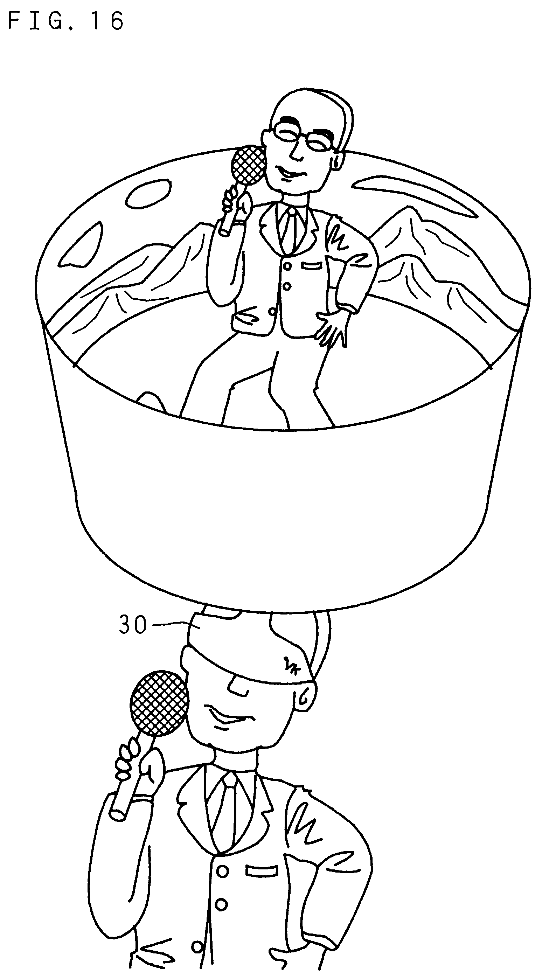

FIG. 12 and FIG. 13 show other examples of the camera layout of the image forming apparatus of the present invention. In the example of FIG. 1, 16 cameras 1 are installed in one row along the side face of the camera mounting base 100 in the circumferential direction; however, as illustrated in FIG. 12 and FIG. 13, cameras 1 may be installed in a plurality of rows (two rows in the example of FIG. 12, and three rows in the example of FIG. 13) along the side face of the camera mounting base 100 in the circumferential direction. In the example of FIG. 12, those in the lower row have image pickup directions that are set in the horizontal direction in the same manner as FIG. 1, and those in the upper row have image pickup directions that are set in diagonally upward directions; thus, two rows of cameras 1, each row having 16 cameras installed along the side face of the camera mounting base 100, are arranged. Moreover, in the example of FIG. 13, those in the lower row have image pickup directions that are set in diagonally downward directions, those in the center row have image pickup directions that are set in the horizontal direction in the same manner as FIG. 1, and those in the upper row have image pickup directions that are set in diagonally upward directions; thus, three rows of cameras 1, each row having 16 cameras installed along the side face of the camera mounting base 100, are arranged. In such examples of the layout of cameras 1, synthesis process (overlap process) of images is carried out not only in lateral directions, but also in longitudinal directions, thereby obtaining an image stretching over the entire region in the circumferential direction.

Additionally, in the above-mentioned examples, 16 cameras 1 in one row are installed along the side face of the camera mounting base 100 in the circumferential direction; however, the number 16 is only one example, and another number of installed cameras may of course be adopted. Nevertheless, when high image quality, time required for the synthesis process and compression process, and other factors are taken into consideration, the number of installed cameras 1 is most preferably set in the range of 10 to 20. Additionally, in FIG. 13, those cameras 1 in the upper row whose image pickup directions are set in diagonally upward directions and those cameras 1 in the lower row whose image pickup directions are set in diagonally downward directions may be fewer in number than those cameras in the center row, since they have more overlapped portions in images.

Moreover, in the above-mentioned examples, a plurality of cameras 1 are installed in the entire region in the circumferential direction; however, a plurality of cameras 1 may be installed along one area (for example, in a range of 180*) of the entire region in the circumferential direction, and image data may be acquired from the area (for example, in a viewing angle of 180°) in the same manner as the aforementioned examples.

Furthermore, in order to eliminate the influence of parallax in these cameras 1, a polygon mirror is installed in the central position among the plural installed cameras 1, and the image-pickup surface of each of the cameras 1 is directed toward the central position (the polygon mirror side); thus, images shown on the polygon mirror may be picked UP by each of the cameras 1.

In the third and fourth embodiments, instead of transferring the compressed-synthesized moving image data to the personal computer 14 through the transfer line 13, the compressed-synthesized moving image data from the microcomputer 12 or 18 may be directly recorded in the recording medium of the recording device installed on the camera 1 side. Moreover, instead recording the compressed-synthesized moving image data, the synthesized moving image data may be recorded as it is. Furthermore, the compressed-synthesized moving image data is transferred to the personal computer 14 through the transfer line 13; however, the compressed-synthesized moving image data may be transmitted to the personal computer 14 by means of radio.

The following description will discuss examples of the application of the image forming apparatus of the present invention. Images stretching over the entire region or part thereof obtained by the image forming apparatus of the present invention are used not only for security purposes inside buildings such as factories and offices, but also for monitoring a construction site or for confirming the progress of a construction work. Moreover, those images can also be used for presentations in pavilions in an exposition.

Furthermore, the image data stretching over the entire region in the circumferential direction (corresponding to 360°) of the present invention is also utilized as one type of map data that is to be stored in GIS (Global Information System). The image data is also highly prospective for use in business in government offices, such as address confirmation and issuance of resident certificates.

By installing two sets of the image forming apparatuses of the present invention, it becomes possible to measure the distance to an object and also to identify the position of an object.

Additionally, the image forming apparatus of the present invention may be used to preliminarily obtain an image stretching over the entire region in the circumferential direction, and then the image may be partially used by selecting an image within a required viewing range.

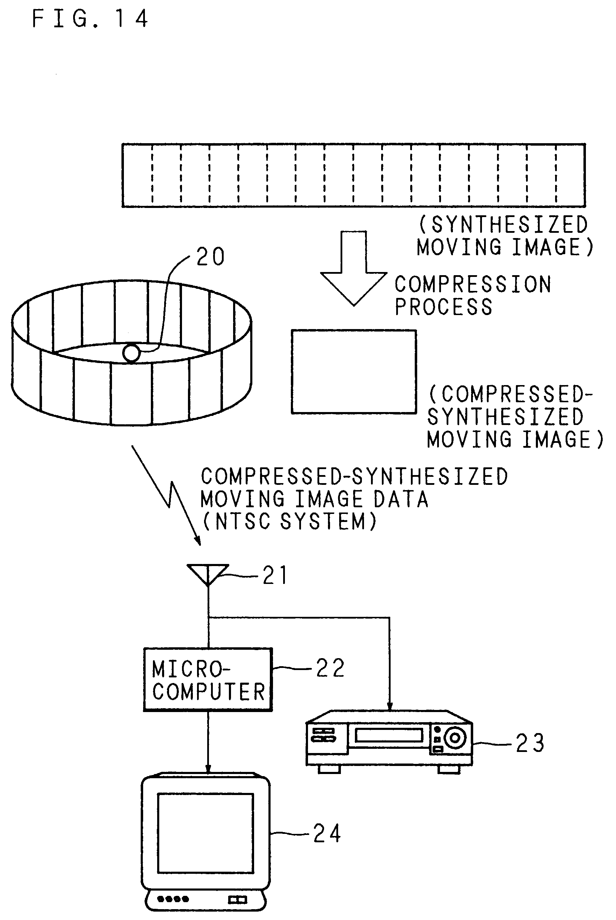

FIG. 14 is a drawing that shows a specific structural example of the present invention. In FIG. 14 reference numeral 20 represents a moving image forming apparatus (digital camera) of the third embodiment (or the fourth embodiment) having a plurality of lenses la, CCDs lb and the microcomputer 12 (or µ-CPUs 17 and the microcomputer 18), and it is placed within a scene that is an object to be picked up. The moving image forming apparatus 20 carries out the aforementioned processes, such as acquiring moving image data, synthesizing adjacent moving image data and compressing the synthesized moving image data, and transmits the obtained compressed-synthesized moving image data as electric waves.

Reference numeral 21 is an antenna for receiving electric waves (compressed-synthesized moving image data) from the moving image forming apparatus 20, and a microcomputer 22, which has a function for decompressing the compressed-synthesized moving image data so as to obtain the original synthesized moving image data, and a commonly-used video deck 23 are connected to the antenna 21. Further, a commonly-used television receiver 24 is connected to the microcomputer 22.

The moving image forming apparatus 20 acquires moving images by using, for example, 16 installed cameras 1; however, in the case of obtaining a laterally long image by each camera 1 having a practical-use lens 1a, it is highly possible that the synthesized image has remarkable distortions. Therefore, the cameras 1 are arranged so that each camera 1 acquires a longitudinally long image, and these images are synthesized so as to obtain a laterally long panoramic synthesized image having less distortions.

Moreover, upon compressing the synthesized moving image data, the moving image forming apparatus 20 compresses the synthesized moving image data to such an extent to form moving image data of the NTSC system. The compression process may be carried out on a frame basis, and since the number of lines in the synthesized moving image data is the same as the number of lines in the moving image data of the NTSC system, the compression process is carried out individually for each line, and no compression process is applied in the longitudinal direction. In this case, the compression process for each line may be carried out based upon pixel data on the corresponding line, or may be designed to thin pixels periodically on the corresponding line.

Such compressed 7 synthesized moving image data matching the NTSC system is received by the antenna 21, and recorded on the video deck 23. Moreover, if necessary, the compressed-synthesized moving image data is decompressed by the microcomputer 22 so that the original synthesized moving image data is obtained, and the data is sent to the television receiver 24 so that the moving image is displayed on the television receiver 24. Here, the compressed-synthesized moving image data matches the NTSC system; therefore, the commonly-used video deck 23 and the commonly-used television receiver 24 are allowed to carry out recording and displaying processes on the data.

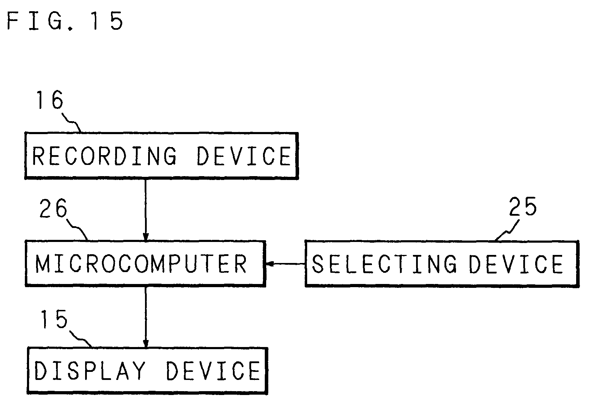

Next, an explanation will be given of an example wherein, from the obtained moving image stretching over the entire region in the circumferential direction, a moving image in one portion of the region is selectively displayed. FIG. 15 is a block diagram showing the arrangement of such an image presenting apparatus of the present invention. The image presenting apparatus is constituted by the display device 15 consisting of, for example, the commonly-used television receiver 24, the recording device 16 consisting of, for example, the commonly-used video deck 23, a selecting device 25 for selecting desired compressed-synthesized moving image data, and a microcomputer 26 which controls these devices and carries out a decompression process on the compressed-synthesized moving image data.

In this arrangement, desired compressed-synthesized moving image data is selected from the recording device 16 based upon information inputted through the selecting device 25, and reproduced, and the compressed-synthesized moving image data is decompressed by the microcomputer 26 to the original synthesized moving image data, and the restored synthesized moving image data is sent to the display device 15 so that the moving image in the desired direction is displayed.

An explanation will be given of a specific example of such a case. In the moving image forming apparatus of the present invention, since moving images stretching over the entire region in the circumferential direction are formed in any timing a user, who puts on a three-dimensional goggle having a gyroscope capable of detecting the position and direction of the head of the user and the direction of the eyes and a display screen for moving images, can simulate to see moving images in the virtual three-dimensional world that vary in accordance with the shift of the viewing direction of the user. In this case, the gyroscope corresponds to the selecting device 25, and the display screen corresponds to the display device 15.

For example, as illustrated in FIG. 16, when a user is singing on a karaoke system, he can simulate a scene in which he is singing in a desired circumstance, such as in a hall, on sea side or in a mountain, by putting on such a threedimensional goggle 30. Moreover, when a user, who puts on the three-dimensional goggle 30, is playing a virtual reality game in which he is killing people around him, the user, upon turning around, can see a situation behind him in real time, thereby making it possible to enhance reality.

As described above, the partially using method, in which images stretching over the entire region in the circumferential direction are preliminarily recorded by using the image forming apparatus of the present invention and only an image within a required viewing area is selected and utilized, contributes to developments in the application of a recording device.

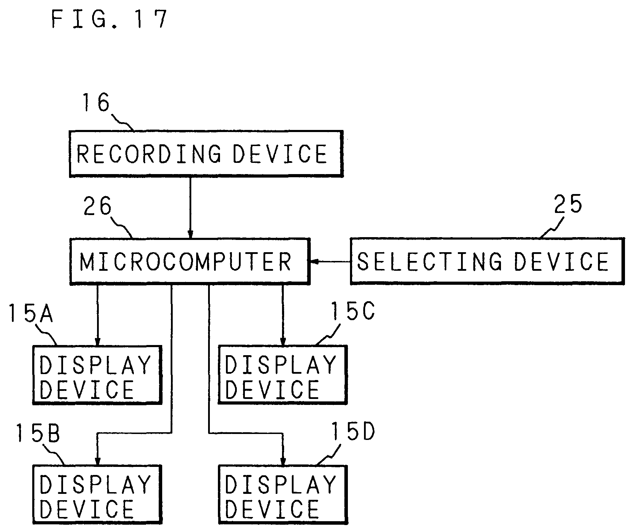

FIG. 17 is a block diagram showing another example of the image presenting apparatus of the present invention. In this image presenting apparatus, a plurality of display devices 15A, 15B, 15C and 15D are provided, moving images with different viewing areas selected by the selecting device 25 (for example, a moving image obtained when a user faces the front, a moving image obtained when the user turns to the right by 90°, a moving image obtained when the user faces the rear and a moving image obtained when the user turns to the left by 90°) are displayed on the display devices 15A, 15B. 15C and 15D.

As described above, in the present invention, a plurality of cameras are placed in a ring fashion, and images acquired by those cameras are joined; therefore, it is possible to form a high-quality image stretching over the entire region in the circumferential direction or one portion thereof by using a simple arrangement.

Moreover, upon joining images obtained by adjacent cameras, the calibration process, the coordinate conversion process to spherical coordinates and the matching process are carried out; therefore, it is possible to obtain a high-quality image without distortion even at overlapped portions. Furthermore, the selection standard for pixels is established with respect to the overlapped portions; therefore, to smooth synthesized images are obtained even in the overlapped portions.

Moreover, compressed-synthesized moving image data thus obtained is preliminarily recorded, and desired compressed moving image data is selected from the contents of the recording so that the selected compressed moving image data is decompressed and displayed; therefore, when a user directs his eyes in various directions, the corresponding images are readily presented to the user.

## Claims

1. A method for forming an image stretching over an entire region in a circumferential direction or one portion thereof around a predetermined position as a center, comprising the steps of:
picking up images by a plurality of cameras placed in the circumferential direction around the predetermined position as the center; and,
joining and synthesizing the images that have been picked up.

2. A method according to claim 1, in which the plurality of cameras are fixedly secured, each having a constant viewing angle.

3. A method according to claim 1 or 2, in which images that are to be picked up by the plurality of cameras are moving images.

4. A method according to any preceding claim, further comprising the steps of:
carrying out a calibration process on image data obtained by image pickup by the plurality of cameras in order to substantially eliminate lens aberration in each camera;
converting two-dimensional orthogonal coordinates of each pixel of the image data that has been subjected to the calibration process into spherical coordinates with the predetermined position as the center;
identifying the same image pickup area in images from adjacent two cameras; and, obtaining a synthesized image by joining the images from the adjacent two cameras in the identified area.

5. A method according to claim 4, in which in said step of obtaining the synthesized image in the area at which a first image and a second image from the adjacent two cameras are overlapped, more pixels of the second image are used as compared with the first image along the side edge portion of the first image, and more pixels of the first image are used as compared with the second image along the side edge portion of the second image.

6. An apparatus for forming an image stretching over an entire region in a circumferential direction or one portion thereof around a predetermined position as a center, comprising:
a plurality of cameras (1) placed in the circumferential direction around the predetermined position as the center; and,
synthesis means (4, 12, 17) for joining and synthesizing the images that have been picked up by the plurality of cameras (1).

7. An apparatus according to claim 6, in which the plurality of cameras (1) are fixedly secured, each having a constant viewing angle.

8. An apparatus according to claim 6 or 7, in which images that are to be picked up by the plurality of cameras (1) are moving images.

9. An apparatus according to any of claims 6 to 8, further comprising:
a plurality of image memories (2), each of which is installed so as to store image data obtained by image pickup by a respective one of the plurality of cameras;
filing means (3) for reading image data stored in the image memories (2) and for forming an image file; and,
transfer means (5) for transferring the image file formed by the filing means (3) to the synthesis means (4).

10. An apparatus according to any of claims 6 to 8, further comprising:
switching means (8) for switching inputs from the plurality of cameras (1);
storage means (8a) for successively inputting and storing image data obtained by image pickup by the plurality of cameras (1) in accordance with switching processes of the switching means (8); and,
transfer means (10) for transferring the image data stored in the storage means (8d) to the synthesis means (4).

11. An apparatus according to any of claims 6 to 10, in which the synthesis means (4, 12, 17) comprises:
means (S21)for carrying out a calibration process on image data obtained by image pickup by the plurality of cameras (1) in order to substantially eliminate lens aberration in each camera (1);
means (S22) for converting two-dimensional orthogonal coordinates of each pixel of the image data that has been subjected to the calibration process into spherical coordinates with the predetermined position as the center;
means (S23) for identifying the same image pickup area in images from adjacent two cameras (1, 1); and,
means (S24, S25) for obtaining a synthesized image by joining the images from the adjacent two cameras (1, 1) in the identified area.

12. An apparatus according to claim 11, in which the means for obtaining a synthesized image (S25) comprises:
means (S32 through S35) for dividing the area at which a first image and a second image from adjacent two cameras (1, 1) are overlapped into a first area (A) corresponding to a side edge portion of the first image, a second area (C) corresponding to a side edge portion of the second image and a third area (B) sandwiched by the first area and the second area; and,
means (S37 through S41) for varying the rate of the number of pixels of the first image and the number of pixels of the second image that are selected and allocated to the first, second and third areas.

13. An apparatus according to any of claims 6 to 12, further comprising compression means (12, 18) for compressing the synthesized image data obtained from the synthesis means (12, 17).

14. An apparatus according to claim 13, in which the synthesis means (12, 17) and the compression means (12, 18) are formed into one chip.

15. An apparatus according to claim 13, further comprising transfer means for transferring the compressed-synthesized image data obtained by the compression means (12, 18) to an external device (14).

16. An apparatus according to claim 15, in which input/output means (12, 18) used for data communication between the cameras (1) and the external device (14), the synthesis means (12, 17) and the compression means (12, 18) are formed into one chip.

17. An image presenting apparatus, comprising an image forming apparatus according to any of claims 6 to 16, in combination with a display means (5, 15) for displaying one portion or all of the image formed by the image forming apparatus.

18. An apparatus according to claim 17, in which the display means (15) has a plurality of display devices (15A, 15B, 15C, 15D) for displaying respective images located in different areas in the circumferential direction.

19. An image presenting apparatus, comprising:
means (25) for selecting one portion of compressed-synthesized image data obtained by the image forming apparatus (20) according to any of claims 13 to 16;
means (26) for decompressing the selected compressed-synthesized image data to synthesized image data: and,
display means (15) for displaying images in accordance with the decompressed synthesized image data.

20. An apparatus according to claim 19, further comprising means (16) for recording the compressed-synthesized image data obtained by the image forming apparatus (20).
